# EUROPÄISCHE PATENTANMELDUNG

(11) **EP 4 699 502 A2**
(43) Veröffentlichungstag der Anmeldung: **25.02.2026**
(21) Anmeldenummer: 26150152.2
(22) Anmeldetag: 16.10.2020
(51) Int. Cl.: A47J 43/07

(54) **SYSTEM MIT KÜCHENMASCHINE UND VERFAHREN**

(62) Teilanmeldung aus: 20202271.1
(71) Anmelder: Vorwerk & Co. Interholding GmbH, 42275 Wuppertal (DE)
(72) Erfinder: STEIN, Matthias, 45472 Mühlheim an der Ruhr (DE); SERNECKI, Miron, 58097 Hagen (DE)
(74) Vertreter: Gille Hrabal Partnerschaftsgesellschaft mbB Patentanwälte

(57) **Zusammenfassung**

Die Erfindung betrifft ein System mit einer Küchenmaschine (1) zum Zubereiten einer Speise in einem Speisenzubereitungsgefäß (2) und/oder einem anderen Küchengerät sowie ein Verfahren und ein Computerprogrammprodukt. Die Küchenmaschine (1) hat ein Werkzeug zum Mischen oder Zerkleinern der Speise in dem Speisenzubereitungsgefäß (2). Eine Steuerungseinheit (12) kann auf ein Rezept (26) zugreifen und durch einen Rezeptschritt (16, 17, 18, 19, 28) des Rezepts (26) veranlasst werden, das Werkzeug und/oder das Heizelement in einer durch den Rezeptschritt (16, 17, 18, 19, 28) definierten Weise zu betreiben. Die Steuerungseinheit (12) ist so eingerichtet, dass eine Soll-Zeit (20) während des Speisenzubereitungsvorgangs oder für eine Fertigstellung von mindestens zwei Rezeptschritten (16, 17, 18, 19, 28) festgelegt wird. Auf diese Weise wird ermöglicht, einen Speisenzubereitungsvorgang während der Durchführung hinsichtlich der Fertigstellungszeiten zu überwachen. In Abhängigkeit von der Überwachung können Maßnahmen getroffen werden, um eine Zubereitung von ein oder mehreren Speisen zeitlich zu optimieren.

## Beschreibung

Die Erfindung betrifft ein System mit einer Küchenmaschine zum Zubereiten einer Speise in einem Speisenzubereitungsgefäß und/oder einem anderen Küchengerät. Die Erfindung betrifft ferner ein Verfahren und ein Computerprogrammprodukt. Die Küchenmaschine umfasst ein Werkzeug zum Mischen oder Zerkleinern der Speise in dem Speisenzubereitungsgefäß. Die Küchenmaschine umfasst ein Speisenzubereitungsgefäß, das von einem Basisteil der Küchenmaschine gelöst werden kann. Die Küchenmaschine kann ein Heiz- oder Kühlelement zum Kühlen oder Erhitzen der Speise in dem Speisenzubereitungsgefäß umfassen.

Küchenmaschinen, die auf Rezepte zur teilautomatisierten Zubereitung einer Speise zugreifen können, sind bekannt. Zur Zubereitung einer Speise arbeitet sich ein Benutzer sukzessive durch die Rezeptschritte in der von dem Rezept vorgegebenen Reihenfolge wie beim Kochen nach einem Rezept in einem Kochbuch. Eine solche Küchenmaschine kann basierend auf einem Rezept Rezeptschritte teilautomatisiert durchführen. Zwischen solchen Rezeptschritten können Eingaben oder Tätigkeiten durch den Benutzer erforderlich sein. Die Erfindung umfasst insbesondere eine solche Küchenmaschine.

Die Druckschriften WO 2018 / 054 668 A1 und die EP 3 515 266 A1 beschreiben Verfahren zur Verarbeitung eines Rezepts.

Patentanmeldungen EP 20 154 494.7 und EP 19 170 795.9 hingewiesen, die sich ebenfalls mit Küchenmaschinen befassen, die eine Speisenzubereitung mithilfe von digitalen Rezepten mit mehreren Rezeptschritten ermöglichen.

Es ist Aufgabe der Erfindung, ein weiterentwickeltes System und ein weiterentwickeltes Verfahren bereitzustellen.

Die Aufgabe wird gelöst durch ein System gemäß Anspruch 1 sowie durch ein Verfahren und ein Computerprogrammprodukt gemäß den Nebenansprüchen. Vorteilhafte Ausführungsformen sind in den Unteransprüchen angegeben.

Zur Lösung der Aufgabe dient ein System mit einer Küchenmaschine zum Zubereiten einer Speise in einem Speisenzubereitungsgefäß und/oder einem anderen Küchengerät. Insbesondere handelt es sich bei dem Küchengerät um ein Speisenzubereitungsgerät. Eine Steuerungseinheit kann auf ein Rezept zugreifen. Die Steuerungseinheit kann die Zubereitung von ein oder mehreren Speisen steuern, insbesondere durch einen Rezeptschritt des Rezepts. Beispielsweise kann ein Werkzeug und/oder ein Heizelement der Küchenmaschine in einer durch den Rezeptschritt definierten Weise betrieben werden. Die Steuerungseinheit kann den Betrieb des Werkzeugs und/oder des Heizelementes unmittelbar steuern oder aber einen Benutzer auffordern, manuell Parameter für den Betrieb einzustellen.

Die Steuerungseinheit ist so eingerichtet, dass die Steuerungseinheit eine Soll-Zeit während des Zubereitens der Speise und/oder für eine Fertigstellung von mindestens zwei Rezeptschritten mit einer Ist-Zeit vergleicht. Der Vergleich erfolgt während des Speisenzubereitungsvorgangs, d.h., noch bevor die Speise fertig zubereitet ist. Eine sogenannte "Live-Überwachung" wird so ermöglicht und die Voraussetzungen für eine "Live-Optimierung" des Speisenzubereitungsvorgangs geschaffen. Das erfindungsgemäße System ermöglicht also, dass ein Speisenzubereitungsvorgang während der Durchführung hinsichtlich der Fertigstellungsdauer bzw. der Fertigstellungszeit überwacht werden kann. Mit anderen Worten kann ein verbessertes Einhalten der ursprünglich geplanten Fertigstellungszeit mit einem reproduzierbaren Kochergebnis selbst im Falle von zeitlichen Abweichungen während des Speisenzubereitungsvorgangs ermöglicht werden.

Die Sollzeit für eine Fertigstellung von mindestens zwei Rezeptschritten wird von der Steuerungseinheit festgelegt. Die Steuerungseinheit, die so eingerichtet ist, dass sie eine Soll-Zeit während des Zubereitens der Speise und/oder für eine Fertigstellung von mindestens zwei Rezeptschritten mit einer Ist-Zeit vergleicht, legt den Soll-Wert nicht notwendigerweise für die Fertigstellung von mindestens zwei Rezeptschritten fest, worauf später noch genauer eingegangen wird. Alternativ kann das Rezept eine Sollzeit für die mindestens zwei Rezeptschritte umfassen. Die Soll-Zeit ist bevorzugt eine zeitliche Dauer, die für die Abarbeitung, also für die Durchführung, der mindestens zwei Rezeptschritte vorgesehen ist. Diese Sollzeit wird mit einer Ist-Zeit verglichen. Die Ist-Zeit ist bevorzugt die Zeit, die während der Durchführung der mindestens zwei Rezeptschritte tatsächlich aufgewendet wird. Es wird also überwacht, ob die Ist-Zeit mit der Soll-Zeit übereinstimmt oder ob es Abweichungen davon gibt. Es wird also überwacht, ob ein Zeitplan eingehalten wird bzw. eingehalten werden kann. Das Ergebnis der Überwachung kann auf verschiedene Weise genutzt werden. So kann das Ergebnis der Überwachung genutzt werden, um den oder die Benutzer darauf hinzuweisen, dass die Speisen beispielsweise erst zu einem späteren Zeitpunkt im Vergleich zu einer ursprünglichen Planung fertig gestellt sein werden. Das Ergebnis der Überwachung kann dazu genutzt werden, um Zubereitungsschritte zu beschleunigen oder eine Reihenfolge von Zubereitungsschritten zu ändern, um einen Zeitplan doch noch einhalten zu können, wenn eine ermittelte Ist-Zeit von einer vorgegebenen Soll-Zeit abweicht.

Ein Rezept im Sinne der vorliegenden Erfindung ist ein elektronisch gespeichertes Rezept. Es kann sich um ein digital gespeichertes Rezept handeln. Ein Rezept ist in eine Mehrzahl von Rezeptschritten unterteilt. Ein Rezeptschritt ist ein Schritt, der für die Zubereitung einer Speise durchgeführt werden muss. Beispielsweise ist gemäß dem Rezept vorgesehen, dass Parmesankäse durch eine Küchenmaschine oder einen Mixer zerkleinert werden soll. Das Rezept kann dann die folgenden Rezeptschritte umfassen.
- erster Rezeptschritt: zerkleinerte Parmesanstücke in das Speisenzubereitungsgefäß der Küchenmaschine geben;
- zweiter Rezeptschritt: Deckel auf das Speisenzubereitungsgefäß aufsetzen;
- dritter Rezeptschritt: einen Startknopf aktivieren;
- vierter Rezeptschritt: Parmesan im Gefäß 10 Sekunden lang mit maximaler Drehgeschwindigkeit zerkleinern.

Rezeptschritt meint also eine einzelne, zusammenhängende Tätigkeit eines Benutzers, einer Küchenmaschine oder eines anderen Küchengeräts, die sich grundsätzlich nicht mehr weiter unterteilen lässt.

Das Rezept enthält für jeden Rezeptschritt ein oder mehrere Informationen für die Steuerungseinheit, die von der Steuerungseinheit ausgewertet werden können.

Informationen stehen der Steuerungseinheit so zur Verfügung, dass die Steuerungseinheit die zur Verfügung stehenden Informationen verarbeiten und dadurch eine Anleitung und/oder einen Vorgang zur Zubereitung einer Speise optimieren kann. Eine Information für die Steuerungseinheit liegt nicht vor, wenn zwar ein Benutzer eine Information erhalten und verstehen kann, diese Information aber nicht in einer Form vorliegt, die die Steuerungseinheit "verstehen" kann, um die Information zum Beispiel für Optimierungsberechnungen nutzen zu können.

Die Informationen können eine Soll-Zeit für einen Rezeptschritt umfassen, d. h., die Zeit, die für die Durchführung des Rezeptschrittes benötigt wird. Insbesondere kann es für jeden Rezeptschritt eines Rezeptes eine Soll-Zeit geben. Es kann aber auch eine Soll-Zeit für zwei Rezeptschritte angegeben sein. Das Rezept enthält beispielsweise für die Steuerungseinheit die Information, dass für den zuvor genannten ersten Rezeptschritt 10 Sekunden Zeit, für den zuvor genannten zweiten und dritten Rezeptschritt insgesamt 5 Sekunden Zeit und für den zuvor genannten vierten Rezeptschritt 15 Sekunden Zeit benötigt werden. Für den vierten Rezeptschritt können beispielsweise 15 Sekunden (und nicht lediglich 10 Sekunden) vorgesehen sein, weil dieser umfasst, dass in einem Arbeitsschritt der Küchenmaschine der aufgesetzte Deckel vor dem Zerkleinern durch das Küchenmaschine automatisiert verriegelt wird und im Anschluss an das Zerkleinern automatisiert entriegelt und dazwischen automatisiert zerkleinert wird. Aus diesen Informationen kann die Steuerungseinheit nun eine Soll-Zeit von 10 Sekunden + 5 Sekunden + 15 Sekunden = 30 Sekunden ermitteln, die für die Durchführung der vier Rezeptschritte eingeplant werden. Wird der Startknopf aktiviert, kann die Steuerungseinheit dadurch eine Information zur Ist-Zeit erhalten, also die Zeit, die für die Durchführung der beiden ersten Rezeptschritte tatsächlich aufgewendet wurde. Beispielsweise kann die Steuerungseinheit auf diese Weise ermitteln, dass für die Durchführung der drei ersten Schritte 30 Sekunden aufgewendet wurden und somit eine zeitliche Verzögerung von 15 Sekunden ausgetreten ist. Die Steuerungseinheit kann nun beispielsweise über einen Lautsprecher oder über ein Display über die aufgetretene Verzögerung informieren. Die Steuerungseinheit kann beispielsweise bewirken, dass im vierten Rezeptschritt nur 8 Sekunden zerkleinert wird, um Zeit aufzuholen. Die Steuerungseinheit kann beispielsweise die im Rezeptschritt hinterlegte Soll-Zeiten für die ersten drei Rezeptschritte anpassen, um beim nächsten Mal Zeitpläne verbessert einhalten zu können. Eine Anpassung kann beispielsweise dann erfolgen, wenn die Steuerungseinheit wiederholt ermittelt, dass ein Benutzer regelmäßig bestimmte Soll-Zeiten überschreitet. Umgekehrt können Soll-Zeiten auch verkürzt werden, wenn die Steuerungseinheit feststellt, dass ein Benutzer regelmäßig eine im Rezept abgespeicherte Sollzeit unterbietet. Das Ergebnis der Überwachung kann also auf viele verschiedene Weise genutzt werden, um Speisenzubereitungen zu optimieren.

Die Erfindung kann also beispielsweise zeitliche Verzögerungen berücksichtigen. Zeitliche Verzögerungen können beispielsweise durch einen Benutzer verursacht werden, wenn der Benutzer für eine im Rezept geplante Benutzer-Handlung mehr Zeit benötigt als im Rezept geplant. Insbesondere hängt die mindestens eine Soll-Zeit von einer im Rezept geplanten Dauer einer Benutzer-Handlung ab. Beispielsweise kann eine Verzögerung durch den Benutzer auftreten, weil dieser unplanmäßig vorrübergehend anderweitig beschäftigt war oder versäumt hat, die vom Rezept vorgegebene Benutzer-Handlung auszuführen, beispielsweise einen Startknopf, z.B. ein Icon auf einem berührempfindlichen Display, zu drücken, der beispielsweise den Start des nächsten Rezeptschrittes initiiert. Die Erfindung ermöglicht es, auf solche Ereignisse reagieren zu können. In einer Ausführungsform umfassen die zwei Rezeptschritte, für deren Fertigstellung eine Soll-Zeit festgelegt und mit einer Ist-Zeit verglichen wird, einen durch eine Funktionskomponente durchgeführten Prozess und eine im Rezept geplante Benutzer-Handlung.

Ein Speisenzubereitungsvorgang ist ein Vorgang, bei dem zumindest eine Speise verarbeitet wird. Insbesondere erstreckt sich ein Speisenzubereitungsvorgang bis zur Fertigstellung einer Speise oder aller geplanten Speisen wie z.B. Vorspeise und Hauptspeise oder Fleisch und Sauce. Ein Speisenzubereitungsvorgang kann auch eine vorübergehende, zeitliche Unterbrechung der Verarbeitung der Speise umfassen. Beispielsweise kann es dazu kommen, dass alle Funktionskomponente ruhen, wenn der Benutzer vom Rezept dazu veranlasst wird, Zutaten außerhalb der Küchenmaschine oder einem Küchengerät vorzubereiten. Ein Speisenzubereitungsvorgang kann das Zubereiten einer Speise in dem Zubereitungsgefäß umfassen. Er kann die Zubereitung mehrerer Speisen oder mehrere Teile von Speisen umfassen. Das Zubereiten einer Speise in dem Speisenzubereitungsgefäß kann ein Speisenzubereitungsvorgang oder ein Teil eines Speisenzubereitungsvorgangs sein. Ein Speisenzubereitungsvorgang kann beispielsweise mithilfe des Werkzeugs und/oder eines Heizelements der Küchenmaschinedurchgeführt werden. Ein Speisenzubereitungsvorgang kann mithilfe eines Kühlelements eines anderen Küchengeräts durchgeführt werden. Ein Speisenzubereitungsvorgang kann einzelne Speisenzubereitungsprozesse, auch kurz als Prozesse bezeichnet, umfassen. Ein Speisenzubereitungsvorgang kann auf einem oder mehreren Rezepten beruhen. Ein Speisenzubereitungsvorgang kann Prozesse umfassen, die in oder unter Nutzung zumindest eines weiteren Küchengeräts durchgeführt werden. Ein weiteres Küchengerät kann beispielsweise ein Rührgerät im Sinne der europäischen Patentanmeldung mit dem amtlichen Aktenzeichen 20 175 328.2, eine Kochplatte, eine Pfanne mit Steuerung, ein Ofen, ein Grill, ein Kühlschrank, ein Gefrierschrank, eine Mikrowelle oder ein Thermometer sein. Auch eine weitere Küchenmaschine ist möglich. Zur Durchführung eines Speisenzubereitungsvorgangs können Informationen von Funktionskomponenten der Küchenmaschine und/oder empfangene Informationen von einem weiteren Küchengerät genutzt werden. Ein Speisenzubereitungsvorgang kann Ausgaben für den Benutzer umfassen, beispielsweise Anzeigen und/oder Benachrichtigungen. Beispielsweise kann die optische Anzeige schrittweiser Anweisungen umfasst sein, mittels derer der Benutzer während des Speisenzubereitungsvorgangs Schritt für Schritt durch ein Rezept geführt wird.

Ein Speisenzubereitungsprozess ist ein durch eine Funktionskomponente der Küchenmaschine oder eines weiteren Küchengeräts ausgeführter Vorgang, bei dem eine Speise mit dem Zweck der Zubereitung verarbeitet wird. Beispiele für derartige Prozesse sind Rühren, Zerkleinern, Erhitzen im Speisenzubereitungsgefäß oder Erhitzen im Ofen, in einer Mikrowelle oder auf einem Grill. Eine Funktionskomponente ist eine technische Einheit, die zum Betrieb eines Küchengeräts und/oder zur Durchführung eines Prozesses elektrisch betrieben werden kann. Die Küchenmaschine umfasst als Funktionskomponenten beispielsweise das Werkzeug mit dem zugehörigen Antrieb.

Ein Speisenzubereitungsvorgang ist ein Vorgang, bei dem eine Speise verarbeitet wird. Getränke, Saucen, Zutaten von Speisen, unverarbeitete oder teilweise verarbeitete Mischungen von Zutaten usw. werden vom Begriff der Speise im Sinne der Erfindung umfasst. Die Küchenmaschine kann eine Waage umfassen, um beispielsweise Zutaten abzuwiegen, die der Benutzer in das Speisenzubereitungsgefäß hinzufügt.

Insbesondere werden die einzelnen Prozesse zur Speisenzubereitung und/oder der Speisenzubereitungsvorgang mittels der Steuerungseinheit gesteuert. Die Steuerungseinheit ist insbesondere dazu eingerichtet, zur Durchführung von Prozessen Betriebsparameter einzelner Funktionskomponenten einzustellen. Die Steuerungseinheit kann dazu eingerichtet sein, Prozesse weiterer Küchengeräte steuern. Mit anderen Worten kann die Steuerungseinheit durch einen Rezeptschritt des Rezepts veranlasst werden, Funktionskomponenten zumindest eines weiteren Küchengeräts in einer durch den Rezeptschritt definierten Weise zu betreiben. Die Steuerungseinheit sendet typischerweise Befehle an die Funktionskomponenten wie etwa den Antrieb des Werkzeugs oder das Heizelement, sodass die Funktionskomponenten als Reaktion auf diese Befehle entsprechend den Befehlen betrieben werden. In einer Ausgestaltung ist das Rezept in einem externen System gespeichert, z.B. in einer Cloud, auf einem Server, in einem Cloud-basierten Computersystem oder einem mobilen Kommunikationsgerät wie z.B. einem Mobiltelefon, Smartphone oder Tablet-PC. In einer alternativen oder ergänzenden Ausgestaltung ist das Rezept in der Steuerungseinheit, in der Küchenmaschine und/oder in einem Küchengerät gespeichert. Steuerungseinheit kann mittels einer festen Datenleitung oder drahtlos auf das Rezept zugreifen.

Die Steuerungseinheit ist vorzugsweise in der Küchenmaschine angeordnet und/oder Teil der Küchenmaschine. In einer alternativen oder ergänzenden Ausgestaltung ist die Steuerungseinheit in einem externen System vorgesehen, in eine Cloud ausgelagert, in einem Server angeordnet, Teil eines Cloud-basierten Computersystem oder von einem mobilen Kommunikationsgerät wie z.B. einem Mobiltelefon, Smartphone oder Tablet-PC bereitgestellt. Ein externer Computer kann die Steuerungseinrichtung sein.

Insbesondere ist die Steuerungseinheit dazu eingerichtet, Betriebsparameter zu ermitteln und bereitzustellen und/oder die Ausgabe einer Information zu initiieren. Eine auszugebende Information kann ein Signal, ein Alarm, eine Anweisung und/oder eine inhaltliche Angabe bezüglich eines Speisenzubereitungsvorgangs enthalten.

Die Steuerungseinheit kann in einer Ausgestaltung vor oder zu Beginn eines Speisenzubereitungsvorgangs basierend auf einer aktuellen Uhrzeit, der geplanten Dauer der ausgewählten Rezeptschritte und optional der Dauer mindestens einer Pufferzeit eine Soll-Zeit festlegen, zu der der Speisenzubereitungsvorgang beendet sein soll. In einer Ausgestaltung wird insbesondere durch Addition mit einer Startzeit die Soll-Zeit in Form eines Zeitpunktes bereitgestellt und mit einem der Ist-Zeit entsprechenden Zeitpunkt verglichen. Eine Soll-Zeit für eine Fertigstellung von mindestens zwei Rezeptschritten beschreibt den Zeitpunkt oder die Dauer zur planmäßigen Fertigstellung. Die zwei Rezeptschritte können dabei zeitlich nacheinander oder zeitlich parallel sein.

Es können bei der Festlegung der Soll-Zeit anhand von Parametern ermittelte Werte genutzt werden, z. B. anhand des jeweiligen Rezeptes und der Anordnung der Rezeptschritte unter Berücksichtigung der zur Verfügung stehenden Ressourcen. Zwischen Rezeptschritten können Pufferzeiten vorgesehen werden, etwa bei der Festlegung der Soll-Zeit.

Das Vorsehen von Pufferzeiten erfolgt insbesondere, wenn Tätigkeiten des Benutzers notwendig sind. Der Grund dafür ist, dass Verzögerungen regelmäßig durch Benutzer verursacht werden. Beträgt beispielsweise eine Soll-Zeit 10 Minuten für Kartoffelschälen, so kann eine Pufferzeit von zwei Minuten hinzugefügt werden, also von 20%. Auch für ein Aktivieren oder Drücken eines Startknopfes wird in einer Ausgestaltung eine Pufferzeit vorgesehen.

Eine Pufferzeit kann vorgesehen werden, wenn zwischen der Küchenmaschine und einem weiteren Küchengerät gewechselt werden muss. Es können vordefinierte oder typische Werte genutzt werden.

Pufferzeiten können beispielsweise durch die Steuerungseinheit automatisiert eingeplant werden. Pufferzeiten können auf elektronisch gespeicherten Erfahrungswerten beruhen. Pufferzeiten können von der Steuerungseinheit berechnet werden.

In einer Ausgestaltung wird eine Ist-Zeit anhand von ein / oder mehreren Sensoren und/oder Messeinrichtungen ermittelt.

In einer Ausgestaltung wird als Soll-Zeit eine Soll-Zeit für die Fertigstellung des gesamten Speisenzubereitungsvorgangs festgelegt. Die Fertigstellung des gesamten Speisenzubereitungsvorgangs meint die Fertigstellung aller Rezeptschritte von ein oder mehreren Rezepten zur Zubereitung von ein oder mehreren Speisen. Es wird also eine Soll-Zeit für die vollständige Zubereitung der ein oder mehreren Speisen festgelegt. Diese wird bevorzugt zusätzlich zu der Soll-Zeit für die Fertigstellung der mindestens zwei Rezeptschritte festgelegt, kann aber auch alternativ dazu festgelegt werden. Sie wird während des Speisenzubereitungsvorgangs durch Vergleich mit zumindest einer Ist-Zeit überwacht. Neben der Soll-Zeit für die Gesamtfertigstellung werden insbesondere zumindest eine und bevorzugt mehrere Soll-Zeiten für Teilfertigstellungsabschnitte festgelegt. Dies sind beispielsweise Soll-Zeiten für einzelne Speisenzubereitungsprozesse oder einzelne Rezeptschritte. Die Fertigstellung des Speisenzubereitungsvorgangs wird während des Speisenzubereitungsvorgangs insbesondere derart überwacht, dass bei Abweichungen von Soll-Zeiten für Teilfertigstellungsabschnitte Maßnahmen ergriffen werden, um die Soll-Zeit für die Gesamtfertigstellung zu erreichen. Dies ermöglicht eine besonders hohe Benutzerfreundlichkeit, da für den Benutzer erkennbar ist, wann der Speisenzubereitungsvorgang fertiggestellt ist.

Wenn eine Steuerungseinheit eine Soll-Zeit während des Zubereitens der Speise mit einer Ist-Zeit vergleicht, kann dieser Vergleich in einer Ausgestaltung zwischen einem Anfang und einem Ende eines einzelnen Rezeptschrittes oder eines einzelnen Prozesses liegen und/oder sich die Soll-Zeit auf eine Dauer innerhalb eines einzelnen Rezeptschrittes oder eines einzelnen Prozesses beziehen.

In einer Ausgestaltung wird eine Vielzahl von Soll-Zeiten insbesondere für die Überwachung des Speisenzubereitungsvorgangs, eines einzelnen Rezeptschrittes oder eines einzelnen Prozesses durch die Steuerungseinheit festgelegt. Auf diese Weise kann eine besonders präzise Überwachung und/oder Regelung zwischen einem Anfang und einem Ende eines Speisenzubereitungsvorgangs, eines einzelnen Rezeptschrittes oder eines einzelnen Prozesses erfolgen. Mit Regelung ist das Einleiten von Maßnahmen gemeint, die dazu dienen, eine mithilfe der Überwachung ermittelten Abweichung bestmöglich zu kompensieren. Beispielsweise streben eingeleitete Maßnahmen an, eine in der Zukunft liegende Soll-Zeit trotz einer Abweichung doch noch näherungsweise zu erreichen, insbesondere mit einem geplanten Zustand der Speise zum Erzielen eines reproduzierbaren Kochergebnisses.

In einer Ausgestaltung ist eine Soll-Zeit mit einer Bedingung verknüpft, so dass bei Erfüllen der Bedingung die Soll-Zeit mit der Ist-Zeit verglichen wird. Die Ist-Zeit wird also bei Erfüllen der Bedingung gemessen und mit der Soll-Zeit verglichen. Liegt eine Abweichung vor oder überschreitet die Abweichung einen Schwellwert, kann eine vordefinierte Maßnahme eingeleitet werden, insbesondere noch bevor der laufende Rezeptschritt oder Prozess beendet ist. Die Bedingung kann ein Zustand der Speise oder ein Zustand aus dem Inneren des Speisenzubereitungsgefäßes sein. Beispielsweise kann die Bedingung eine Temperatur im Speisenzubereitungsgefäß sein, die durch einen Temperatursensor der Küchenmaschine gemessen werden kann. Eine Soll-Zeit kann mit dem Erreichen einer festgelegten Temperatur verknüpft sein, die bei einem planmäßigen Garen einer Speise erzielt wird. Wenn die festgelegte Temperatur erreicht wird und die dann gemessene Ist-Zeit von der Soll-Zeit abweicht, kann bei einem zeitlichen Verzug die Temperatur erhöht werden, um bis zum Ende des Prozesses oder Rezeptschrittes die geplante Soll-Zeit für den gesamten Prozess oder den gesamten Rezeptschritt einzuhalten oder sich diesem verbessert anzunähern. In einem anderen Beispiel kann die Bedingung eine Unwucht sein, die mithilfe einer Waage der Küchenmaschine ermittelt werden kann. Die Unwucht kann über die Beschaffenheit eines Teigs in dem Speisenzubereitungsgefäß hinweisen. Wenn die festgelegte Unwucht erreicht wird und die dann gemessene Ist-Zeit von der Soll-Zeit abweicht, kann bei einem zeitlichen Verzug die Drehgeschwindigkeit erhöht werden, um bis zum Ende des Prozesses oder Rezeptschrittes die geplante Soll-Zeit für den gesamten Prozess oder den gesamten Rezeptschritt einzuhalten oder sich diesem verbessert anzunähern.

In einer Ausführungsform wird eine Maßnahme eingeleitet, wenn eine Abweichung der Ist-Zeit von der Soll-Zeit ermittelt wird. In einer Ausführungsform geschieht dies erst, wenn die Ist-Zeit einen Schwellenwert übersteigt. Insbesondere erfolgt die Maßnahme, um zu bewirken, dass bei einem zukünftigen Vergleich der Soll-Zeit mit der dann aktuellen Ist-Zeit eine geringere oder keine Abweichung mehr vorhanden ist. Die Maßnahme kann demnach eine Maßnahme zur Angleichung einer zukünftigen Ist-Zeit an die Soll-Zeit sein. Auf diese Weise kann eine Fertigstellung gemäß der Soll-Zeit erreicht werden. So kann beispielsweise eine automatische Anpassung von Rezeptschritten oder Speisenzubereitungsprozessen an eine zeitliche Verzögerung erfolgen, die beispielsweise auf ein Verhalten eines Benutzers zurückzuführen ist. Bei einem erfindungsgemäßen System ändert sich entsprechend die Dauer bis zur Fertigstellung eines, mehrerer oder aller Rezeptschritte und/oder das Verhalten der Küchenmaschine in Abhängigkeit von äußeren Einflüssen wie dem Verhalten des Benutzers. Mit anderen Worten wird ein adaptives System zur Verfügung gestellt, welches beim Zubereitungsvorgang auf Abweichungen reagiert und gegebenenfalls Anpassungen durchführt.

Der Schwellenwert definiert einen Toleranzbereich, innerhalb dessen keine Maßnahme notwendig ist. Der Schwellenwert kann ein vorbestimmter Schwellenwert sein, der im Rezept oder an anderer Stelle hinterlegt ist, oder von der Steuerungseinheit festgelegt wird. Bei der Festlegung kann eine Eingabe eines Benutzers berücksichtigt werden. Beispielweise kann, wenn als Ziel eine möglichst schnelle Fertigstellung des Rezeptes angestrebt wird, ein vergleichsweise kleiner Schwellenwert festgelegt werden. In diesem Fall sind nämlich nur geringe Toleranzen hinsichtlich des Fertigstellungszeitpunktes gewünscht.

In einer Ausführungsform wird zusätzlich zumindest eine Soll-Zeit für eine Fertigstellung eines Teilabschnitts mindestens eines Rezeptschritts festgelegt und/oder es werden kontinuierlich Soll-Zeiten für die durchzuführenden Rezeptschritte festgelegt. Insbesondere erfolgt während der Durchführung eines Rezeptschritts mindestens einmal, beispielsweise mehrfach, insbesondere so oft wie möglich ein Vergleich der Soll-Zeit mit der Ist-Zeit des Speisenzubereitungsvorgangs. Es wird somit nicht erst am Ende eines Rezeptschritts, sondern regelmäßig und insbesondere so oft wie möglich überwacht, ob die Soll-Zeit bzw. Soll-Zeiten eingehalten werden. Somit können Maßnahmen auch während eines oder mehrerer laufender Speisenzubereitungsprozesse eingeleitet werden.

In einer Ausführungsform ist die Steuerungseinheit so ausgestaltet, dass eine Anpassung zumindest eines derzeitigen oder zukünftigen Rezeptschritts erfolgt, wenn eine Abweichung der Ist-Zeit von der Soll-Zeit ermittelt wird und insbesondere einen bestimmten Schwellenwert übersteigt.

Ein derzeitiger Rezeptschritt ist ein Rezeptschritt des derzeitigen Speisenzubereitungsvorgangs, der aktuell bearbeitet wird. Ein zukünftiger Rezeptschritt ist ein Rezeptschritt des derzeitigen Speisenzubereitungsvorgangs, der noch nicht begonnen hat. Eine Anpassung meint typischerweise eine Veränderung mindestens eines Betriebsparameters einer Funktionskomponente.

Ein Betriebsparameter ist ein Parameter, mit dem eine Funktionskomponente betrieben werden kann. Ein Betriebsparameter kann ein Parameter einer Funktionskomponente der Küchenmaschine oder des weiteren Küchengeräts zur Durchführung des Speisenzubereitungsvorgangs sein. Der Betriebsparameter kann beispielsweise ein Parameter eines Werkzeugs oder eines Heizelements wie etwa eine Drehzahl, ein Motorstrom, eine Temperatur, eine Zeitdauer oder eine Startzeit eines Speisenzubereitungsvorgangs sein. Die Küchenmaschine kann dazu eingerichtet sein, bei Ermittlung einer Abweichung Betriebsparameter des Werkzeugs und/oder des Heizelements zu verändern. Durch die Veränderung eines Betriebsparameters kann beispielsweise die Temperatur und/oder die Drehzahl um oder auf einen spezifischen Wert reduziert werden. Insbesondere wird zumindest ein Betriebsparameter im Vergleich zur entsprechenden Vorgabe des Rezepts verändert. Die Veränderung kann einen oder mehrere Parameter einer Funktionskomponente wie beispielsweise eines Werkzeugs oder eines Heizelements betreffen. Die Veränderung kann als Betriebsparameter eine Startzeit eines Speisenzubereitungsprozesses oder Rezeptschritts betreffen und in einer bezüglich eines Rezepts verzögerten Ausführung des Prozesses bestehen.

In einer Ausgestaltung ist die Steuerungseinheit so eingerichtet, dass eine Anpassung einer Dauer zumindest eines derzeitigen oder zukünftigen Rezeptschritts oder Prozesses erfolgt und/oder eine Anpassung einer Startzeit eines zukünftigen Rezeptschritts oder Prozesses erfolgt. Die Anpassung der Dauer und/oder der Startzeit erfolgt, wenn eine Abweichung der Ist-Zeit von der Soll-Zeit ermittelt wird und die Abweichung insbesondere einen bestimmten Schwellenwert überschreitet.

Durch die Anpassung einer Dauer können nachfolgende Speisenzubereitungsprozesse verschoben werden. Durch die Anpassung kann die Fertigstellung zumindest eines Rezeptschritts vorgezogen oder verzögert werden. Insbesondere erfolgt die Anpassung mit einem bestimmten Ziel. Dieses kann beispielsweise darin bestehen, die Einhaltung der Soll-Zeit zu gewährleisten oder ein oder mehrere Speisen möglichst schnell fertig zu stellen.

Die Anpassung der Startzeit eines zukünftigen Rezeptschritts kann dadurch erfolgen, dass eine Pufferzeit zwischen dem zukünftigen Rezeptschritt und dem davor durchzuführenden Rezeptschritt verringert oder auf null gesetzt wird. Derartige Pufferzeiten sind insbesondere vorgesehen, um Tätigkeiten des Benutzers zu berücksichtigen, deren Zeitdauern nicht oder nur ungenau vorhersagbar sind. Die Reduktion der Pufferzeit ist eine einfache Maßnahme, um eine verbleibende Zeit zur Fertigstellung des Speisenzubereitungsvorgangs zu verringern.

Die Anpassung der Startzeit kann dadurch erfolgen, dass im Fall einer zu frühen Fertigstellung zumindest eines Rezeptschritts zumindest eine Maßnahme ergriffen wird, um die Fertigstellung dennoch zum geplanten Zeitpunkt zu gewährleisten. Dies kann beispielsweise durch Einfügen von Pausenzeiten, Warmhalten zumindest teilweise fertiggestellter Speisen oder Teile von Speisen, Anpassung von Betriebsparametern und/oder Neuplanung noch ausstehender Rezeptschritte erfolgen.

Die Anpassung der Startzeit eines zukünftigen Rezeptschritts kann dadurch erfolgen, dass eine Pausenzeit zwischen dem zukünftigen Rezeptschritt und dem davor durchzuführenden Rezeptschritt oder zwischen zwei Prozessen eingefügt oder vergrößert wird. Derartige Pausenzeiten sind eine einfache Maßnahme, um eine verbleibende Zeit zur Fertigstellung zumindest eines Rezeptschritts zu erhöhen.

Die Anpassung der Startzeit kann dadurch erfolgen, dass bei einer früheren Fertigstellung zumindest eines Rezeptschritts zumindest ein nachfolgender Rezeptschritt vorgezogen wird. Dies ist zumindest dann keine Selbstverständlichkeit, wenn verschiedene Speisen parallel mit verschiedenen Küchengeräten zubereitet werden. Auf diese Weise wird die Fertigstellung des betroffenen Pfads und somit des betroffenen Teils der Speise insgesamt vorgezogen. Die Anpassung der Startzeit kann dadurch erfolgen, dass bei einer früheren Fertigstellung zumindest eines Rezeptschritts einer, mehrere und insbesondere alle nachfolgenden unabhängigen Rezeptschritte zeitlich vorgezogen werden. In einer Ausgestaltung erfolgt eine Anpassung mindestens einer Startzeit im Falle einer im Vergleich zur Soll-Zeit früheren Ist-Zeit im kritischen Pfad. Der kritische Pfad ist der Pfad, der eine Mindestfertigstellungsdauer bestimmt, insbesondere ohne zeitliche Lücken. In einer Ausführungsform werden sämtliche Rezeptschritte eines oder mehrerer unabhängiger Pfade zeitlich vorgezogen. Auf diese Weise wird die Fertigstellung aller Speisenteile oder Speisen des zubereiteten Rezepts früher fertiggestellt.

In einer Ausführungsform ist die Steuerungseinheit dazu eingerichtet, im Rahmen einer Anpassung einen Warmhaltevorgang zu initiieren. Der Warmhaltevorgang erfolgt typischerweise nach einem Rezeptschritt, gemäß dem eine Speise oder ein Teil davon teilweise oder vollständig fertiggestellt worden ist. Mit anderen Worten wird in dieser Ausführungsform die Abfolge der Rezeptschritte unverändert durchgeführt und am Ende eines Abschnitts des Speisenzubereitungsvorgangs wird ein fertiggestellter Teil der Speise oder eine fertig gestellte Speise warmgehalten. Insbesondere ist die Steuerungseinheit dazu eingerichtet, einen Betriebsparameter einer Einrichtung zum Warmhalten festzulegen, beispielsweise auf der Basis eines Rezeptschritts. Die Einrichtung zum Warmhalten kann etwa ein beheizbares Speisenzubereitungsgefäß sein, so zum Beispiel ein Backofen oder ein beheizbares Speisenzubereitungsgefäß mit integriertem Heizelement einer Küchenmaschine. Insbesondere ist die Steuerungseinheit dazu eingerichtet, die Einrichtung zum Warmhalten entsprechend zu betreiben. Der Warmhaltevorgang kann als zusätzlicher Rezeptschritt in eine Abfolge von Rezeptschritten eingefügt werden. An den Benutzer können entsprechende Anweisungen ausgegeben werden.

In einer Ausführungsform ist die Steuerungseinheit dazu eingerichtet, einen zusätzlichen Rezeptschritt einzufügen oder einen optionalen Rezeptschritt als verbindlich zu definieren, um eine verbleibende Zeit zur Fertigstellung zu erhöhen. Dies kann beispielsweise bei Vorliegen vorbestimmter Randbedingungen erfolgen. Zum Beispiel kann ein Braten in einem Backofen gegart werden, während eine Sauce zeitgleich in einer Küchenmaschine zubereitet wird. Ziel ist es, den Braten und die Sauce zeitgleich fertig zu stellen, sodass die daraus bestehende Mahlzeit zu einem bestimmten Zeitpunkt fertig wird. Kommt es im Pfad der Sauce, das heißt, im Rahmen der rezeptschritte, der der Zubereitung der Sauce dienen, zu einer Verzögerung, kann es angebracht sein, den Pfad des Bratens zu verlängern, um die gleichzeitige Fertigstellung zu gewährleisten. Eine einfache Verlängerung der Garzeit im Backofen ist nicht angebracht, da der Braten sonst zu trocken werden könnte. In diesem Beispiel kann aber die Temperatur im Backofen gesenkt und unter dieser Bedingung die Garzeit im Backofen verlängert werden. Alternativ oder ergänzend kann zusätzlich ein Hinzufügen von Wasser und/oder Sahne vorgesehen werden, um die Garzeit im Backofen ohne negative Auswirkungen auf die Speisenzubereitung zu verlängern.

Die Art und/oder die Höhe der Anpassung kann in Abhängigkeit der Größe der Abweichung erfolgen. Bei einer geringeren Abweichung, die jedoch über dem Schwellenwert liegt, kann es ausreichen, einen nachfolgenden Prozess oder Rezeptschritt geringfügig zu verschieben und/oder mindestens eine Pufferzeit zu verkürzen. Bei einer größeren Abweichung kann es dagegen notwendig sein, einen folgenden Rezeptschritt um eine gewisse Zeit zu verkürzen.

Es ist möglich, dass Speisenzubereitungsprozesse zumindest zeitabschnittsweise zeitgleich durchgeführt werden, etwa mittels der Küchenmaschine und einem oder mehreren weiteren Küchengerät. In diesem Fall erfolgt der Speisenzubereitungsvorgang zumindest zeitweilig auf verschiedenen Pfaden. Hierbei ist es möglich, dass die Abweichung der Ist-Zeit von der Soll-Zeit nur einen der Pfade betrifft. Eine Anpassung einer Dauer und/oder einer Startzeit betrifft dabei zunächst insbesondere nur den Pfad, in dem die Abweichung auftritt. Die Anpassung betrifft somit nur die Teilmenge an folgenden Speisenzubereitungsprozessen bzw. Rezeptschritten, die in dem Pfad durchgeführt werden.

In einer Ausführungsform wird der zumindest eine Speisenzubereitungsprozess eines anderen Pfades, der nicht von der Abweichung betroffen ist, unverändert fortgeführt. In einer weiteren Ausführungsform erfolgt eine Anpassung einer Dauer und/oder einer Startzeit eines Rezeptschritts des anderen Pfades. So ist es etwa möglich, dass es im ersten Pfad eine Verzögerung gegeben hat und die mittels der beiden Pfade hergestellten Speisen zeitgleich benötigt werden, um gemeinsam weiteverarbeitet zu werden. In diesem Fall kann beispielsweise eine Pausenzeit zwischen Rezeptschritten des anderen Pfades erhöht werden und/oder die Durchführung mindestens eines Rezeptschritts des anderen Pfades länger erfolgen.

In einer Ausführungsform ist die Steuerungseinheit so eingerichtet, dass ein kritischer Pfad bestimmt und bei der Anpassung der Dauer und/oder der Startzeit berücksichtigt wird. Die Bestimmung und/oder Berücksichtigung kann kontinuierlich erfolgen. Ein kritischer Pfad ist ein solcher Pfad, dessen Speisenzubereitungsprozesse keine oder nur unwesentliche Verkürzung erlauben, dessen Bearbeitungszeit länger ist als die Bearbeitungszeit des mindestens einen weiteren Pfades und/oder der die geringste oder keine Pufferzeit aufweist. In einer Ausgestaltung werden zwingend Maßnahmen eingeleitet, die bewirken sollen, die Speisenzubereitung zu verkürzen, wenn bei einem kritischen Pfad durch die Steuerungseinheit eine zeitliche Verzögerung festgestellt wurde. Bei anderen Pfaden geschieht dies zumindest nicht zwingend.

In einer Ausgestaltung ist die Steuerungseinheit so eingerichtet, dass zumindest ein Betriebsparameter eines derzeitigen oder zukünftigen Rezeptschritts oder Speisenzubereitungsprozesses angepasst wird, wenn eine Abweichung der Ist-Zeit von der Soll-Zeit ermittelt wird. Dies geschieht vorteilhaft nur dann, wenn die Abweichung einen bestimmten Schwellenwert überschreitet. Die Steuerungseinheit kann entsprechende Befehle oder Betriebsparameter an eine Funktionseinheit senden, sodass diese als Reaktion darauf mit einem oder mehreren angepassten Betriebsparametern betrieben wird. Eine solche Anpassung von Betriebsparametern kann erfolgen, um einen Garprozess zu beschleunigen. Beispielsweise können eine höhere Temperatur, eine steilere Heizkurve, eine höhere Leistung und/oder eine höhere Rührgeschwindigkeit eingestellt werden. Eine steilere Heizkurve führt zu einem schnelleren Erreichen einer Zieltemperatur und somit zu einer schnelleren Fertigstellung. Eine höhere Rührgeschwindigkeit kann zu einem erhöhten Wärmeübergang und somit zu einer schnelleren Fertigstellung führen. Eine Anpassung von Betriebsparametern kann erfolgen, um einen Garprozess zu verlangsamen. Beispielsweise können eine geringere Temperatur, eine flachere Heizkurve, eine niedrigere Leistung und/oder eine geringere Geschwindigkeit eingestellt werden.

Insbesondere wird beispielsweise durch die Steuerungseinheit ein kritischer Pfad ermittelt und ein Betriebsparameter eines Rezeptschritts des kritischen Pfads wird angepasst. Ein kritischer Pfad umfasst in der Regel einen automatischen Zubereitungs- bzw. Kochschritt, da der kritische Pfad grundsätzlich den längsten Speisenzubereitungsprozess betrifft.

In einer weiteren Ausgestaltung ist die Steuerungseinheit so eingerichtet, dass durch diese eine Startzeit eines Speisenzubereitungsprozesses oder Rezeptschritts festgelegt wird oder werden kann. Die Zuordnung und/oder Festlegung erfolgt, wenn eine Abweichung der Ist-Zeit von der Soll-Zeit ermittelt wird und zwar vorzugweise, wenn die Abweichung einen bestimmten Schwellenwert überschreitet. Die Startzeit kann sich auf ein Küchengerät beziehen. Die Startzeit kann aber auch für eine Tätigkeit durch einen Benutzer vorgesehen sein.

Durch eine Zuordnung durch die Steuerungseinheit kann festgelegt werden, mit welchem Küchengerät und/oder mit welcher Funktionskomponente ein Speisenzubereitungsprozess durchgeführt werden soll. Die Zuordnung des Speisenzubereitungsprozesses zu einem verfügbaren Küchengerät und/oder zu einer verfügbaren Funktionskomponente meint im Fall einer Anpassung eine veränderte und damit neu Zuordnung, also eine Neuplanung von noch ausstehenden ein oder mehreren Rezeptschritten. Es können alle verbleibenden Rezeptschritte oder Speisenzubereitungsprozesse jeweiligen verfügbaren Funktionskomponenten neu zugeordnet werden. Dies kann zu einer geänderten Verteilung der Rezeptschritte und/oder Speisenzubereitungsprozesse auf die verfügbaren Küchengeräte sowie Funktionskomponenten führen. Eine geänderte Reihenfolge von verbleibenden Rezeptschritten kann die Folge sein. Eine geänderte Reihenfolge könnte insgesamt dazu führen, dass die Soll-Zeit für die Fertigstellung des Speisenzubereitungsvorgangs eingehalten wird.

Ebenso ist es möglich, durch Nutzung von mehr Küchengeräten und/oder bessere Ausnutzung bereits genutzter Küchengeräte eine weitergehende Parallelisierung vorzusehen. Dabei werden beispielsweise noch abzuarbeitende Rezeptschritte zeitökonomisch auf die vorhandenen Küchengeräte aufgeteilt. Insbesondere können auch Prozesse, die nicht unmittelbar einer Verarbeitung einer Speise dienen, wie beispielsweise das Vorheizen eines Ofens, entsprechend zugeordnet oder hinsichtlich ihrer Startzeit festgelegt werden.

Insbesondere ist es möglich, auch während eines Speisenzubereitungsvorgangs weitere Küchengeräte bereitzustellen, um sie in den Speisenzubereitungsvorgang zu integrieren, um auf diese Weise bei Bedarf eine im Vergleich zur anfänglichen Planung beschleunigte Fertigstellung zu erreichen. Insbesondere ist die Steuerungseinheit dazu eingerichtet, während des Speisenzubereitungsvorgangs ein weiteres verfügbares Küchengerät oder mindestens ein Funktionskomponente von mindestens einem verfügbaren weiteren Küchengerät zur Durchführung der Speisenzubereitungsprozesse der verbleibenden Rezeptschritte zu ermitteln. Es kann also ein zusätzliches Küchengerät bereitgestellt und in den aktuellen Speisenzubereitungsvorgang integriert werden, wenn absehbar ist, dass eine pünktliche Fertigstellung mit den vorhandenen Küchengeräten nicht gewährleistet werden kann. In einer Ausgestaltung wird bei manuell durch den Benutzer durchzuführende Rezeptschritte eine weitere Person, d.h., ein zweiter Benutzer, in den aktuellen Speisenzubereitungsvorgang integriert, falls eine weitere Person verfügbar ist.

In einer Ausführungsform ist die Steuerungseinheit dazu eingerichtet, bei der Zuordnung eines Speisenzubereitungsprozesses zu wenigstens einem verfügbaren Küchengerät bzw. zu einer verfügbaren Funktionskomponente und/oder bei der Festlegung einer geänderten Startzeit die derzeit ausgeführten Speisenzubereitungsprozesse zu berücksichtigen. Auf diese Weise kann die Zuordnung zu jeder Zeit während der Durchführung des Speisenzubereitungsvorgangs erfolgen, ohne dass Prozesse unterbrochen werden müssen oder eine Pause abgewartet zu werden braucht. Es wird ermittelt, wann geeignete Zeitpunkte für einen geänderten Ablauf sind, sodass dieser nahtlos eingesetzt werden kann.

In einer Ausführungsform erfolgt die Zuordnung eines Speisenzubereitungsprozesses zu wenigstens einem verfügbaren Küchengerät bzw. zu wenigstens einer verfügbaren Funktionskomponente und/oder die Festlegung der Startzeit derart, dass Totzeiten von wenigstens einem Küchengerät minimiert werden. Totzeiten sind Zeiten während eines Speisenzubereitungsvorgangs, zu denen ein Küchengerät nicht benutzt wird. Die Minimierung von Totzeiten kann dadurch erfolgen, dass eine Summe an Totzeiten eines Küchengeräts, mehrerer Küchengeräte oder aller Küchengeräte minimiert wird.

Die Minimierung von Totzeiten kann derart erfolgen, dass ein erstes Küchengerät eine Priorität gegenüber zumindest einem anderen und insbesondere gegenüber allen anderen Küchengeräten genießt und Totzeiten des ersten Küchengeräts minimiert werden. Auf diese Weise kann ein Küchengerät bevorzugt zur Speisenzubereitung genutzt werden. Das Küchengerät, welches bevorzugt benutzt werden soll, kann ein Küchengerät mit dem größten Funktionsumfang sein. Dadurch kann vorteilhaft die Zahl der benötigten Küchengeräte minimiert werden.

In einer weiteren Ausgestaltung ist die Steuerungseinheit so eingerichtet, dass beim Zuordnen eine vom Benutzer eingegebene Zielvorgabe berücksichtigt werden kann.

In dieser Ausführungsform ist das System so eingerichtet, dass der Benutzer ein gewünschtes Ziel eingeben kann. Insbesondere umfasst das System, beispielsweise die Küchenmaschine, eine Eingabeeinheit zum Eingeben der Zielvorgabe durch den Benutzer.

Grundsätzlich dient eine eingeleitete Maßnahme einem bestimmten Ziel. Dieses kann beispielsweise darin bestehen, eine Soll-Zeit einzuhalten, die Speise zu einer bestimmten Uhrzeit fertig zu stellen oder die Speise möglichst schnell fertig zu stellen.

Damit die Steuerungseinheit auf einfache Weise die Speisenzubereitung steuern kann, können die Informationen eines Rezeptes umfassen, dass ein Rezeptschritt von einem anderen Rezeptschritt abhängig ist. Damit ist gemeint, dass der erstgenannte Rezeptschritt nur ausgeführt werden kann, nachdem der andere Rezeptschritt ausgeführt worden ist. Das Rezept kann also für das System die Information enthalten, dass der zuvor genannte dritte Rezeptschritt von dem zweiten Rezeptschritt abhängt. Das Rezept kann für das System die Information enthalten, dass der zuvor genannte zweite Rezeptschritt von dem zuvor genannten ersten Rezeptschritt abhängt. Die Steuerungseinheit berücksichtigt für eine Steuerung der Speisenzubereitung solche Abhängigkeiten vorteilhaft, um Unmöglichkeiten zu vermeiden.

In einer Ausgestaltung enthält ein Rezept für einen Rezeptschritt eine Information für das System, von welchem anderen Rezeptschritt der Rezeptschritt abhängig ist, wobei zwischen zumindest zwei verschiedenen Abhängigkeiten unterschieden wird. Es kann beispielsweise zwischen einer direkten und einer indirekten Abhängigkeit unterschieden werden.

Zwischen einem ersten und einem zweiten nachfolgenden Rezeptschritt gibt es eine direkte Abhängigkeit, wenn der zweite Rezeptschritt zeitlich unmittelbar nach dem ersten Rezeptschritt mit demselben Küchenmaschine ausgeführt werden muss. Es ist dann nicht möglich, mit dem Küchenmaschine zunächst den ersten Rezeptschritt auszuführen, im Anschluss daran einen dritten Rezeptschritt und im Anschluss daran den zweiten Rezeptschritt. Es ist auch nicht möglich, den zweiten Rezeptschritt vor dem ersten Rezeptschritt auszuführen.

Zwischen einem ersten und einem zweiten nachfolgenden Rezeptschritt gibt es eine indirekte Abhängigkeit, wenn zwischen einem ersten und einem zweiten Rezeptschritt ein dritter Rezeptschritt durchgeführt werden kann, wobei der erste und der zweite Rezeptschritt nicht mit demselben Küchenmaschine ausgeführt werden. Es ist wiederum nicht möglich, den zweiten Rezeptschritt vor dem ersten Rezeptschritt auszuführen.

Muss ein zweiter Rezeptschritt zwingend unmittelbar im Anschluss an einen ersten Rezeptschritt mit einem Küchengerät durchgeführt werden, so handelt es sich also um eine direkte Abhängigkeit. Ist diese Information für das System gespeichert, dann ist die Reihenfolge erster Rezeptschritt, dritter Rezeptschritt, zweiter Rezeptschritt keine Reihenfolge, die möglich ist, wobei der dritte Rezeptschritt ein Rezeptschritt ist, der ebenfalls mit dem Küchengerät durchgeführt werden soll. Die Reihenfolge erster Rezeptschritt, dritter Rezeptschritt, zweiter Rezeptschritt ist dann keine Kombinationsmöglichkeit, die die Steuerungseinheit berücksichtigen kann.

Muss ein zweiter Rezeptschritt im Anschluss an die Durchführung eines ersten Rezeptschritts durchgeführt werden und werden für beide Rezeptschritte nicht dasselbe Küchengerät benötigt und kann zwischen dem ersten Rezeptschritt und dem zweiten Rezeptschritt ein dritter Rezeptschritt durchgeführt werden, so handelt es sich also um eine indirekte Abhängigkeit. Ist diese Information für das System gespeichert, dann ist die Reihenfolge erster Rezeptschritt, dritter Rezeptschritt, zweiter Rezeptschritt eine Reihenfolge, die möglich ist, und damit eine Kombinationsmöglichkeit, die die Steuerungseinheit berücksichtigen kann. Den zweiten Rezeptschritt vor dem ersten Rezeptschritt auszuführen ist dann keine Kombinationsmöglichkeit, die die Steuerungseinheit berücksichtigen kann.

Im Fall einer indirekten Abhängigkeit weiß damit die Steuerungseinheit, dass Reihenfolgen von Rezeptschritten vertauscht werden können, dass aber ein nicht beliebiges Vertauschen nicht möglich ist. Im Fall einer direkten Abhängigkeit weiß die Steuerungseinheit, dass Reihenfolgen von betroffenen Rezeptschritten vertauscht werden können. Das Steuern wird mithilfe von solchen vorhandenen Abhängigkeitsinformationen also erleichtert.

Weitere Erläuterungen und Einzelheiten zu den Vorteilen werden in der europäischen Patentanmeldung mit dem amtlichen Aktenzeichen 20 154 494.7 beschrieben, auf die wir hiermit Bezug nehmen und die wir hiermit einbeziehen.

In einer Ausgestaltung ist die Steuerungseinheit so eingerichtet, dass diese ermittelt, ob ein Rezeptschritt eine Abhängigkeit zu zumindest einem anderen Rezeptschritt aufweist. Abhängigkeiten müssen also nicht zwingend in einem Rezept hinterlegt sein.

In einer Ausgestaltung ist die Steuerungseinheit so eingerichtet, dass eine Anzahl an Benutzern, die größer oder gleich zwei ist, beim Zuordnen des Speisenzubereitungsprozesses oder Rezeptschritts und/oder beim Festlegen der Startzeit berücksichtigt wird.

Mit anderen Worten ist die Steuerungseinheit dazu eingerichtet, die Zuordnung eines Speisenzubereitungsprozesses zu wenigstens einer verfügbaren Funktionskomponente und/oder die Festlegung der Startzeit derart auszuführen, dass mehrere Benutzer berücksichtigt werden. Beispielsweise erfolgt die Planung der noch ausstehenden Rezeptschritte derart, dass Tätigkeiten unabhängig voneinander und/oder zeitgleich stattfinden können. Beispielsweise wird für jeden Benutzer zumindest ein Pfad definiert, welche auszuführende Tätigkeiten und für Speisenzubereitungsprozesse zu nutzende Küchengeräte umfasst. Ein Küchengerät kann dabei zu unterschiedlichen Zeiten von unterschiedlichen Nutzern verwendet werden, also nacheinander Bestandteil mehrerer Pfade sein. Mehrere Nutzer können auf flexible Weise unter Nutzung mehrerer Küchengeräte eine oder mehrere Speisen zubereiten. Die Speisenzubereitung durch mehrere Nutzer ermöglicht die Zubereitung von vielen und/oder komplexen Speisen und/oder eine kürzere Zubereitungsdauer. Die Nutzung der verfügbaren Küchengeräte und das Verhindern von Totzeiten sind so besonders effizient. Es wird ein geführtes Kochen für mehrere Personen bis hin zu Personengruppen, gegebenenfalls unter Nutzung einer Vielzahl von Küchengeräten und/oder zur Zubereitung einer Vielzahl von Speisen, ermöglicht.

In einer weiteren Ausgestaltung ist die Steuerungseinheit dazu eingerichtet, verfügbare Speisenzubereitungsgeräte und/oder verfügbare Funktionskomponenten von mindestens einem weiteren Küchengerät, insbesondere Speisenzubereitungsgerät, zur Durchführung der Speisenzubereitungsprozesse der Rezeptschritte zu ermitteln.

Mit anderen Worten kann die Steuerungseinheit ermitteln, welche weiteren Küchengeräte oder Funktionskomponenten von weiteren Küchengeräten neben den Funktionskomponenten der Küchenmaschine, also dem Werkzeug und/oder dem Heizelement, verfügbar sind. Dazu können in einem ersten Schritt verfügbare Küchengeräte ermittelt werden. Es können in einem zweiten Schritt die jeweiligen Funktionskomponenten der verfügbaren Küchengeräte ermittelt werden. Das System kann so eingerichtet sein, dass die Ermittlung manuell gestartet werden kann und/oder dass bei Vorliegen bestimmter Rahmenbedingungen eine Ermittlung erfolgt. Auch kann das System so eingerichtet sein, dass ein in die Nähe der Küchenmaschine gebrachtes weiteres Küchengerät automatisch ermittelt oder erkannt wird.

Die Ermittlung der Küchengeräte und/oder Funktionskomponenten (also deren Fähigkeiten) kann beispielsweise dadurch erfolgen, dass eine Eingabemöglichkeit für den Benutzer bereitgestellt wird, mittels welcher der Benutzer die verfügbaren Küchengeräte und/oder die zugehörigen verfügbaren Funktionskomponenten eingeben kann. Die Ermittlung der Küchengeräte und/oder Funktionskomponenten kann dadurch erfolgen, dass eine kabelgebundene oder kabellose Verbindung zwischen einer mit der Steuerungseinheit in datentechnischer Verbindung stehenden Sende- und/oder Empfangseinheit und etwaigen verfügbaren Küchengeräten hergestellt wird. Die Ermittlung der Küchengeräte und/oder Funktionskomponenten kann dadurch erfolgen, dass gescannt wird, welche Küchengeräte in einer Umgebung vorhanden sind. Anschließend kann es möglich sein, dass eine Liste erstellt wird, aus welcher der Nutzer die tatsächlich gewünschten Küchengeräte auswählen kann. Auf diese Weise kann eine teilautomatisierte Ermittlung der Küchengeräte und/oder Funktionskomponenten erfolgen.

Es ist möglich, dass die Steuerungseinheit Zugriff auf einen Datensatz hat, in dem von verschiedenen Küchengeräten umfasste Funktionskomponenten hinterlegt sind, so dass die Steuerungseinheit auf der Basis der Art oder Bezeichnung des verfügbaren Küchengeräts die jeweiligen Funktionskomponenten, also deren Fähigkeiten, identifizieren kann. Es ist möglich, dass die jeweiligen Funktionskomponenten der Küchengeräte mithilfe der oben genannten Verbindung an die Steuerungseinheit übermittelt werden. Dies ermöglicht eine vollautomatisierte Ermittlung der Funktionskomponenten. Eine Verbindung und/oder ein Scannen kann beispielsweise mit einer der folgenden Techniken realisiert werden: USB, Bluetooth, WLAN, Nahfeldkommunikation (NFC), optische Erfassung, beispielsweise unter Erkennung von kodierten Informationen wie QR-Codes oder mittels automatischer Bilderkennung. Mit diesen Techniken kann auch eine Erfassung der einzelnen Funktionskomponenten der jeweiligen Küchengeräte erfolgen.

Die ermittelten Küchengeräte bzw. Funktionskomponenten von Küchengeräten können beispielsweise genutzt werden, um ihnen Speisenzubereitungsprozesse oder Rezeptschritte zuzuordnen und/oder Speisenzubereitungsprozesse mit ihnen durchzuführen. Diese Ausgestaltung ermöglicht ein besonders flexibles Reagieren auf Abweichungen, sodass die Reproduzierbarkeit der Speisenzubereitung weiter verbessert wird.

In einer weiteren Ausgestaltung ist die Steuerungseinheit so ausgestaltet ist, dass eine Fertigstellung eines Rezeptschritts durch eine Benutzereingabe, durch eine Handlung eines Benutzers oder durch eine Erkennung eines vordefinierten Zustands erkannt wird.

Die Erkennung der Fertigstellung eines Rezeptschritts erfolgt insbesondere zur Ermittlung der Ist-Zeit zwecks Vergleichs mit der Soll-Zeit. Insbesondere erkennt die Steuerungseinheit die Fertigstellung des Rezeptschritts. Die Fertigstellung eines Rezeptschritts kann beispielsweise dadurch erkannt werden, dass ein Benutzer eine entsprechende Betätigung mittels einer Eingabeeinheit der Küchenmaschine durchführt. Beispielsweise kann die Küchenmaschine ein berührungsempfindliches Display als Ein- und Ausgabeeinheit aufweisen und eine Betätigung einer virtuellen Schaltfläche "Weiter" dient zur Bestätigung der Fertigstellung eines Rezeptschritts.

Eine Handlung des Benutzers kann beispielsweise die Platzierung einer Speise in einem Backofen, das Herausnehmen einer Speise aus einem Speisenzubereitungsgefäß oder das manuelle Einstellen eines bestimmten Betriebsparameters eines weiteren Küchengeräts sein. Insbesondere umfasst das System eine Einrichtung zur Erkennung der Handlung des Benutzers, z. B. einen Sensor.

Die Erkennung eines vordefinierten Zustands kann beispielsweise die Erkennung einer vorgegebenen Temperatur sein. Diese kann beispielsweise im Rezept hinterlegt sein. So kann etwa die Fertigstellung des Rezeptschritts "Backofen vorheizen" dadurch erkannt werden, dass die Zieltemperatur erreicht wird. Insbesondere umfasst das System eine Einrichtung zur Erkennung eines vordefinierten Zustands, z. B. einen internen oder externen Sensor. Insbesondere umfasst das System ein Thermometer, das über eine drahtlose Verbindung Daten austauschen kann. Auch die Erkennung einer vordefinierten Konsistenz eines herzustellenden Teiges ist möglich, beispielsweise anhand einer ermittelten Stromaufnahme eines Elektromotors zum Antrieb des Werkzeugs bzw. anhand eines Verlaufs der Stromaufnahme. Diese Ausgestaltung ermöglicht eine besonders flexible Steuerung der Speisenzubereitung.

In einer Ausführungsform umfasst das System neben einer Küchenmaschine zumindest ein weiteres Küchengerät zur Durchführung eines Speisenzubereitungsvorgangs. Das weitere Küchengerät kann beispielsweise ein Rührgerät im Sinne der europäischen Patentanmeldung mit dem amtlichen Aktenzeichen 20 175 328.2, eine Kochplatte, ein Ofen, eine Mikrowelle oder ein Thermometer sein.

Damit die Steuerungseinheit zuverlässig und einfach steuern kann, können die Informationen eines Rezeptes für einen Rezeptschritt eine Angabe umfassen, welches Küchengerät für die Durchführung eines Rezeptschrittes benötigt wird. Für einen Rezeptschritt können auch zwei und mehr Küchengeräte zur Auswahl gestellt sein.

Das System umfasst in einer Ausgestaltung zumindest zwei Küchengeräte und eine elektronische Ressourcen-Speichereinrichtung für ein Speichern einer Liste mit Küchengeräten, die das System umfasst, und/oder für ein Speichern der Zahl der Benutzer, die für eine Zubereitung von ein oder mehreren Speisen zur Verfügung stehen. Das System umfasst eine Rezept-Speichereinrichtung für ein Speichern von mindesten einem Rezept für die Zubereitung von mindestens einer Speise. Die Steuerungseinheit ist so eingerichtet, dass diese die Zubereitung von ein oder mehreren Speisen optimiert und zwar unter Berücksichtigung von Informationen für das System, die ein Rezept umfasst. Es gibt dann eine optimierte Reihenfolge von Rezeptschritten, die anders sein kann als die ursprünglich von einem Rezept vorgesehenen Reihenfolge. Es kann eine Reihenfolge von Rezeptschritten sein, wobei die Rezeptschritte aus verschiedenen Rezepten stammen können. Diese Optimierung geschieht vor der Durchführung der Rezeptschritte. Es kann beispielsweise so optimiert worden sein, dass zwei Speisen zeitgleich fertig werden. Im Anschluss an die Optimierung werden die Speisen zubereitet und zwar gemäß der optimierten Reihenfolge von Rezeptschritten unter Berücksichtigung von Soll-Zeiten und Ist-Zeiten in der zuvor geschilderten Weise.

Die in der europäischen Patentanmeldung mit dem amtlichen Aktenzeichen 20 154 494.7 beschriebenen Maßnahmen zur anfänglichen Optimierung der Reihenfolge von Rezeptschritten werden in den Offenbarungsgehalt dieser Anmeldung hiermit einbezogen. Die erfindungsgemäße Steuerungseinheit kann dann die Aufgaben der aus der Druckschrift bekannten Optimierungseinrichtung übernehmen. Zur Erfindung gehört also, dass zu Beginn einer Zubereitung von ein oder mehreren Speisen die Zubereitung zunächst optimiert wird, wie dies in der europäischen Patentanmeldung mit dem amtlichen Aktenzeichen 20 154 494.7 beschrieben wird.

Ein weiterer Aspekt der Erfindung betrifft ein Verfahren zum Zubereiten einer Speise mit den Schritten:
- Zugreifen auf ein Rezept,
- Steuern einer Küchenmaschine und/oder eines Küchengeräts für das Zubereiten der Speise durch mindestens einen Rezeptschritt des Rezepts, und
- Vergleichen einer Soll-Zeit während des Zubereitens der Speise oder für eine Fertigstellung von mindestens zwei Rezeptschritten mit einer Ist-Zeit.

In einer Ausführungsform des Verfahrens sind ferner folgende Schritte vorgesehen:
- Ermitteln von verfügbaren Funktionskomponenten der Küchenmaschine und/oder des mindestens einen Küchengeräts zur Durchführung eines Speisenzubereitungsprozesses mindestens eines Rezeptschrittes,
- Zuordnen der Speisenzubereitungsprozesse, die in dem mindestens einen Rezeptschritt definiert sind, zu den verfügbaren Funktionskomponenten, und
- Ändern des Rezepts durch Verändern der zeitlichen Anordnung der Speisenzubereitungsprozesses zueinander zur Verkürzung der Fertigstellung der Speise.

Das Ändern des Rezepts zur Verkürzung der Fertigstellung der Speise, z.B. durch Parallelisierung von Prozessen durch Aufteilung auf mehrere Küchengeräte und/oder das Ändern der zeitlichen Reihenfolge der Prozesse in Abhängigkeit von der Verfügbarkeit der Funktionskomponenten ist bereits oben näher erläutert.

Ein weiterer Aspekt der Erfindung betrifft ein Computerprogrammprodukt oder ein computerlesbares Medium, umfassend Befehle, die bei einer Ausführung durch einen Prozessor, der insbesondere Teil der Steuerungseinheit ist, diesen veranlassen, die Schritte des oben beschriebenen Verfahrens gemäß dem vorhergehenden Aspekt der Erfindung auszuführen.

Die Definitionen und Ausführungsformen des Systems des eingangs erläuterten Aspekts der Erfindung sind auch auf die beiden weiteren Aspekte der Erfindung anwendbar. Ebenso sind die Merkmale der beiden weiteren Aspekte der Erfindung auf den eingangs erläuterten Aspekt der Erfindung anwendbar.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: eine schematische Darstellung einer Küchenmaschine;
- Figur 2:: eine schematische Darstellung eines Küchengerätes;
- Figur 3:: eine schematische Darstellung eines Rezepts mit einem Vergleich einer Soll-Zeit mit einer Ist-Zeit;
- Figur 4:: eine schematische Darstellung der Überwachung eines Speisenzubereitungsvorgangs;
- Figur 5:: Illustration eines ersten Beispiels einer Änderung des Rezepts anhand der Überwachung durch den Vergleich der Soll-Zeit mit der Ist-Zeit; und
- Figur 6:: Illustration eines zweiten Beispiels einer Änderung des Rezepts anhand der Überwachung.

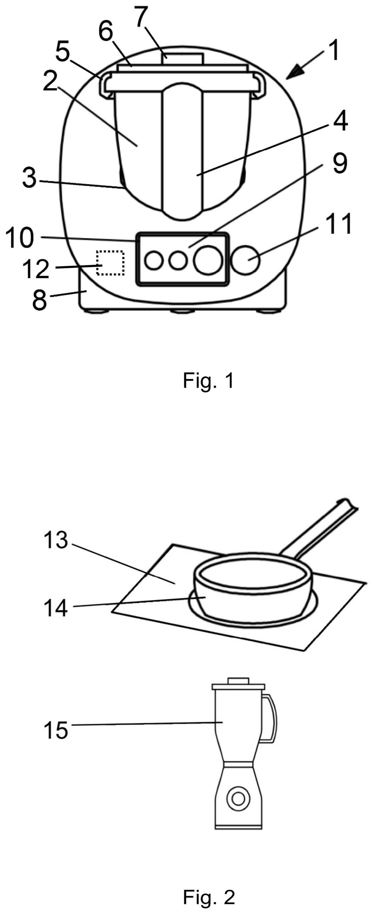

Die Figur 1 zeigt eine Küchenmaschine 1, die Teil des erfindungsgemäßen Systems sein kann. Die Küchenmaschine 1 umfasst ein Speisenzubereitungsgefäß 2, welches in eine Halterung 3 der Küchenmaschine 1 eingesetzt ist. Das Speisenzubereitungsgefäß 2 umfasst einen Griff 4, um das Speisenzubereitungsgefäß 2 aus der Halterung 3 leicht entfernen zu können. Die Küchenmaschine 1 umfasst insbesondere einen Schließmechanismus mit beispielsweise schwenkbar gelagerten Armen 5. In der in der Figur 1 gezeigten Schließstellung umschließen die Arme 5 einen Deckel 6. Dadurch ist der Deckel 6 dann fest mit dem Speisenzubereitungsgefäß 2 verbunden. Der Deckel 6 umfasst eine Öffnung, in welche ein zum Beispiel transparentes Gefäß 7 eingesetzt ist. Durch das Gefäß 7 ist die Öffnung in dem Deckel 6 verschlossen. Das Gefäß 7 kann jederzeit von der Öffnung abgehoben werden, sodass dann eine Öffnung bereitstellt ist, durch die hindurch eine Zutat in das Speisenzubereitungsgefäß 2 eingefüllt werden kann. Das Gefäß 7 kann als Dosierhilfe dienen. Wird der Schließmechanismus geöffnet, dann kann der Deckel 6 vom Speisenzubereitungsgefäß 2 entfernt werden. Die Küchenmaschine 1 umfasst eine im Fußteil integrierte Waage 8.

Eine Benutzeroberfläche 9 wird auf einem Bildschirm 10 dargestellt. Der Bildschirm 10 ist vorzugsweise berührungsempfindlich, um beispielsweise Betriebsparameter durch Berühren des Bildschirms einstellen zu können. Der Bildschirm 10 dient als Ein- und Ausgabeeinheit. Die Küchenmaschine kann als zusätzliche Eingabeeinheit beispielsweise einen Dreh- und/oder Druckknopf 11 umfassen, der ebenfalls dazu dienen kann, im Zusammenspiel mit der Benutzeroberfläche 9 einen oder mehrere Betriebsparameter einstellen zu können. Wird in der Benutzeroberfläche 9 beispielsweise eine Bestätigung durch den Benutzer bezüglich eines fertig gestellten Rezeptschritts angefordert, so kann durch Druck auf den Dreh- und/oder Druckknopf 11 die Bestätigung eingegeben werden. Bezieht sich die Benutzeroberfläche 9 beispielsweise auf eine Rühr- und Schneideinrichtung der Küchenmaschine 1, so kann durch Drehen an dem Dreh- und/oder Druckknopf 11 beispielsweise eine Drehgeschwindigkeit eingestellt werden. Durch Drehen an dem Dreh- und/oder Druckknopf 11 können beispielsweise auch Zeitdauern für bestimmte Speisenzubereitungsprozesse und/oder Temperaturen eingestellt werden.

Die Küchenmaschine 1 umfasst eine schematisch dargestellte Steuerungseinheit 12 mit einem Prozessor und einem Speicher, die auf ein digitales Rezept zugreifen und durch einen Rezeptschritt des Rezepts veranlasst werden kann, die Funktionskomponenten der Küchenmaschine 1 und weiterer Küchengeräte so zu betreiben, wie es in dem Rezeptschritt definiert ist. Die Steuerungseinheit 12 kann ferner dazu eingerichtet sein, Betriebsparameter der Funktionskomponenten anders als im Rezeptschritt definiert einzustellen. Insbesondere ist die Steuerungseinheit 12 mit einer vorzugsweise drahtlosen Sende- und/oder Empfangseinheit ausgestattet, um jeweilige datentechnische Verbindungen zu einem externen Gerät herzustellen. Das externe Gerät ist beispielsweise ein Cloud-Computer, ein mobiles Kommunikationsgerät wie z.B. einen Smartphone oder Tablet-PC oder ein anderes Küchengerät. Darüber hinaus kann die Steuerungseinheit 12 dazu eingerichtet sein, das digitale Rezept für den Speisenzubereitungsvorgang zu optimieren. Dabei können beispielsweise einzelne Rezeptschritte oder in einzelnen Rezeptschritten definierte Speisenzubereitungsprozesse verfügbaren Funktionskomponenten zugeordnet werden. Die Steuerungseinheit 12 kann dazu eingerichtet sein, verfügbare Funktionskomponenten zu ermitteln.

Das System kann ein oder mehrere der in der Figur 2 gezeigten weiteren Küchengeräte umfassen und zwar ein Kochfeld 13 mit einer Pfanne 14 und ein Rührgerät 15. Jedes der Küchengeräte kann eine Sende- und/oder Empfangseinheit umfassen, über die elektronische Daten ausgetauscht werden können, so zum Beispiel untereinander, mit der Küchenmaschine 1 und/oder mit einem externen Computer, der räumlich von den Küchengeräten getrennt sein kann.

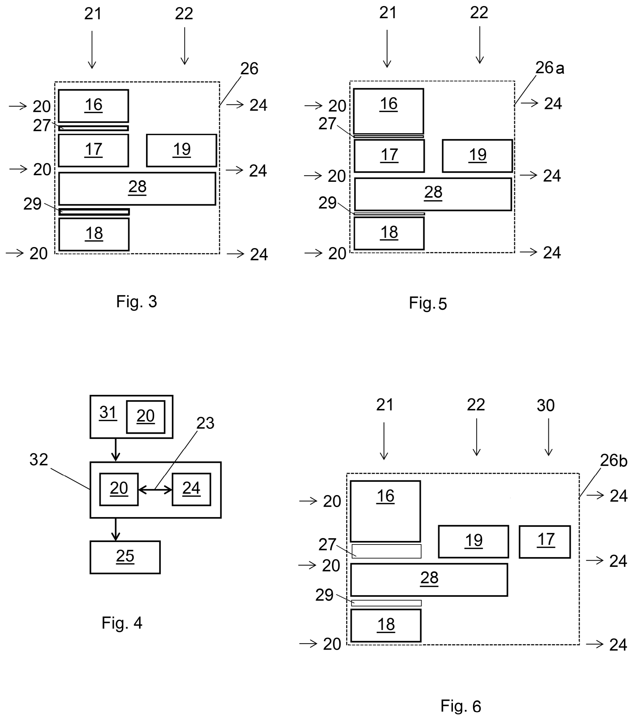

Die Figur 3 zeigt den beispielhaften Ablauf eines Speisenzubereitungsvorgangs gemäß eines Rezeptes 26 mit einem Vergleich einer Soll-Zeit 20 mit einer Ist-Zeit 24, vorzugsweise an mehreren Zeitpunkten während des Speisenzubereitungsvorgangs. Insbesondere enthält das Rezept 26 der Figur 3 keine weiteren als die in Fig. 3 dargestellten Schritte. Die Rezeptschritte 16, 17, 18 des Rezeptes 26 sind in einem ersten Pfad 21 angeordnet und der Rezeptschritt 19 des Rezeptes 26 in einem zweiten Pfad 22. Beide Pfade 21, 22 sollen zumindest zeitabschnittsweise zeitgleich unter Nutzung unterschiedlicher Küchengeräte durchgeführt werden, beispielsweise von der Küchenmaschine 1 (z.B. aus Figur 1) und mindestens einem anderen Küchengerät, z.B. der Pfanne 14 auf dem Kochfeld 13 aus Figur 2. Beispielsweise ist Rezeptschritt 16 auf das Hinzufügen von Zwiebeln in das Speisenzubereitungsgefäß 2 mit einer vorgegebenen Menge gerichtet, die mithilfe der Waage 8 überprüft werden kann. Für den Rezeptschritt 16 ist eine Pufferzeit 27 vorgesehen. Beispielsweise ist Rezeptschritt 17 auf das Anbraten der Zwiebeln gerichtet, was bevorzugt mit einem Heizelement der Küchenmaschine im Speisenzubereitungsgefäß 2 oder alternativ mit der Pfanne 14 auf dem Kochfeld 13 gemäß dem Rezept 26 ausgeführt werden kann. Beispielsweise ist Rezeptschritt 19 auf das Zerkleinern von Tomaten gerichtet, was bevorzugt mit dem Rührgerät 15 oder alternativ mit dem Werkzeug der Küchenmaschine ausgeführt werden kann. Beispielsweise ist Rezeptschritt 28 auf das Zusammenführen der zerkleinerten Tomaten und der angebratenen Zwiebeln gerichtet, wobei das manuelle Zusammenführen ebenfalls mit einer Pufferzeit 29 versehen ist. Beispielsweise ist der Rezeptschritt 18 auf ein Erhitzen und gleichzeitig Rühren der zusammengeführten Speise gerichtet, was durch das Heizelement und das Werkzeug der Küchenmaschine gleichzeitig realisiert werden kann. Die Rezeptschritte 16, 17 und 18 sind zwangsläufig in dieser Reihenfolge auszuführen. Rezeptschritt 19 ist zeitlich vor dem Rezeptschritt 28 unabhängig davon parallel ausführbar. Da Rezeptschritt 19 eine geringere Zeitdauer benötigt als die Summe der Rezeptschritte 16 und 17, kann auch die Startzeit des Rezeptschritt 19 innerhalb eines bestimmten Zeitfensters frei gewählt werden. Der erste Pfad 21 ist hinsichtlich der Zeitdauer maßgeblich und demnach hier der kritische Pfad. In einer Ausgestaltung werden alle Rezeptschritte eines Pfades auf ein und demselben Küchengerät durchgeführt. In einer Ausgestaltung definiert ein Rezept wie das Rezept 26 den Speisenzubereitungsvorgang.

Vorzugsweise werden die Rezeptschritte des Pfads 21 durch oder in Verbindung mit der Küchenmaschine durchgeführt. Bevorzugt wird der Rezeptschritt 19 des Pfads 22 auf dem Rührgerät 15 durchgeführt.

In Figur 3 ist ersichtlich, dass mindestens eine Soll-Zeit 20, bevorzugt mehrere Soll-Zeiten 20, während des Speisenzubereitungsvorgangs und/oder für die Fertigstellung von mindestens zwei Rezeptschritten, z.B. der Rezeptschritte 16 und 17, festgelegt wird. Wenn eine Bedingung, die mit einer jeweiligen Soll-Zeit 20 verknüpft ist, als erfüllt von der Steuerungseinheit 12 detektiert wird, erfolgt ein Erfassen der Ist-Zeit 24 und ein Vergleich der Soll-Zeit mit der Ist-Zeit. Die erste Soll-Zeit wird während des Rezeptschrittes 16 mit einer Ist-Zeit 24 verglichen. Die Bedingung hierfür ist an das Erreichen eines festgelegten Gewichtes durch hinzugefügte Zwiebeln geknüpft, die geringer ist als das durch das Rezept verlangte Gewicht der hinzuzufügenden Zwiebeln. Es ist auf diese Weise bestmöglich sichergestellt, dass der Vergleich der Soll-Zeit mit der Ist-Zeit noch vor dem Ende dieses Rezeptschrittes erfolgt. Ein weiterer Vergleich einer Soll-Zeit mit einer Ist-Zeit erfolgt wie bereits erwähnt nach den Rezeptschritten 16 und 17 sowie optional am Ende des Speisenzubereitungsvorgangs. Der Vergleich der Soll-Zeit mit der Ist-Zeit bei Fertigstellung der Speise ist wie erwähnt optional und dient beispielsweise der Überprüfung des Erfolgs der eingeleiteten Maßnahmen nach Feststellen einer zeitlichen Abweichung.

Die Figur 4 zeigt schematisch die Überwachung eines Speisenzubereitungsvorgangs. Zunächst erfolgt ein Festlegen 31 der Soll-Zeit 20. Dies kann anhand der Vorgaben des Rezeptes 26 erfolgen. Anschließend erfolgt eine Überwachung 32 der Soll-Zeit 20 durch einen Vergleich 23 der Soll-Zeit 20 mit der Ist-Zeit 24, wie oben bereits erläutert. Ergibt der Vergleich 23 eine Abweichung der Soll-Zeit 20 von der Ist-Zeit 24, und überschreitet die Abweichung insbesondere einen bestimmten Schwellenwert, so wird eine Maßnahme 25 eingeleitet. Insbesondere ist dies eine Maßnahme zur Verkürzung des Speisenzubereitungsvorgangs, so dass z.B. eine zeitliche Verzögerung im Umfang der ermittelten Abweichung teilweise oder vollständig kompensiert wird. Insbesondere wird die Maßnahme durch die Steuerungseinheit eingeleitet. Das Einleiten der Maßnahmen umfasst insbesondere die entsprechende Steuerung der Funktionskomponenten, also beispielsweise den Betrieb der Funktionskomponenten mit veränderten Betriebsparametern. Falls keine Abweichung ermittelt wird, werden typischerweise keine Maßnahmen eingeleitet.

Die beispielsweise vorgesehenen Maßnahmen werden im Folgenden beschrieben. Insbesondere wird zunächst eine Anpassung der Startzeit zumindest eines noch ausstehenden Rezeptschritts in Erwägung gezogen. Sollte dies nicht ausreichen, kann eine zwischen Rezeptschritten vorgesehene Pufferzeit aufgebraucht werden. Zur Verlängerung eines Speisenzubereitungsprozesses können Pausenzeiten eingeführt werden. Sollte dies nicht ausreichen, kann ein Abarbeiten des Rezepts nach dem ursprünglichen Plan mit anschließendem Warmhalten erwogen werden. Sollten die bisher genannten Schritte nicht ausreichen, könnten im kritischen Pfad Kochparameter verändert werden. Falls auch dies nicht ausreicht, kann eine neue Planung, d.h., zeitliche Anordnung, der ausstehenden Rezeptschritte mit möglicherweise weitergehender Parallelisierung erwogen werden. Falls die genannten Maßnahmen nicht erfolgreich sind, kann der kritische Pfad auf den verursachenden Pfad festgelegt werden und die Schritte in der genannten Reihenfolge wiederholt werden. Der verursachende Pfad ist beispielsweise der Pfad, der die verzögernden manuellen Schritte umfasst. Schließlich ist auch eine Kombination der genannten Maßnahmen möglich.

Die Figur 5 illustriert den Fall, dass der Benutzer mehr Zeit als im ursprünglichen Rezept 26 (Fig. 3) vorgesehen benötigt, um die richtige Menge Zwiebeln mit dem verlangten Gewicht in das Speisenzubereitungsgefäß 2 der Küchenmaschine zu geben. Dass sich eine zeitliche Verzögerung anbahnt, wurde bereits bei Erreichen der Hälfte des verlangten Gewichtes der benötigten Zwiebeln durch einen Vergleich der Soll-Zeit mit der Ist-Zeit von der Steuerungseinheit 12 erkannt. Als eingeleitete Maßnahme wurden die Pufferzeiten 27 und 29 reduziert und ein entsprechend geändertes Rezept 26a erzeugt. Auf dieses Weise konnte die zeitliche Verzögerung kompensiert und die Speise zeitlich wie geplant und mit der vorgesehenen Qualität fertiggestellt werden.

Die Figur 6 illustriert ebenfalls den Fall, dass der Benutzer mehr Zeit als im ursprünglichen Rezept 26 (Fig. 3) vorgesehen benötigt, um die richtige Menge Zwiebeln mit dem verlangten Gewicht in das Speisenzubereitungsgefäß 2 der Küchenmaschine zu geben. Die zeitliche Verzögerung, die analog zum Beispiel der Figur 5 durch einen Vergleich der Soll-Zeit mit der Ist-Zeit von der Steuerungseinheit 12 erkannt wurde, war jedoch größer als im Beispiel der Figur 5, und zwar größer als die Pufferzeiten 27 und 29. Daher leitete die Steuerungseinheit 12 die Maßnahme für das veränderte Rezept 26b ein, wonach der Rezeptschritt 17 (Anbraten der Zwiebeln) auf einen zusätzlichen Pfad 30 parallelisiert von der Pfanne 14 auf dem Kochfeld 13 ausgeführt wird. Das Anbraten der Zwiebeln des Rezeptschritts 17 erfolgt daher nicht mehr wie in Fig. 3 ursprünglich geplant durch die Küchenmaschine. Weil das Zerkleinern der Tomaten im Rezeptschritt 19 parallel im Rührgerät 15 nicht mehr rechtzeitig vorgezogen werden konnte und auch das Anbraten der Zwiebeln des Rezeptschritts 17 in dem zusätzlichen Pfad 30 ebenfalls nicht früher fertigzustellen war, wurde die Pufferzeit 27 ausgedehnt, d.h., eine Pause hinzugefügt. Wie der Vergleich der Soll-Zeit mit der Ist-Zeit nach den Rezeptschritten 16, 17 und 19 ergab, konnte die zuvor erkannte zeitliche Abweichung, d.h., in diesem Fall zeitliche Verzögerung, vollständig aufgeholt und folglich erfolgreich durch die eingeleitete Maßnahme kompensiert werden. Der Rezeptschritt 28 begann daher zeitlich wie geplant und auch der Speisenzubereitungsvorgang wurde insgesamt zeitlich wie ursprünglich geplant fertiggestellt.

Insbesondere wird eine Anpassung oder Annäherung des Rezepts an ein Optimum durch die Steuerungseinheit 12 angestrebt. Dies kann die Zeit oder alternativ die Energieeffizienz, Ergonomie, weitere Zielgrößen oder Kombinationen davon betreffen. Ein computerimplementiertes Verfahren kann die Generierung von maschinenlesbarem Code auf der Basis des optimierten Rezepts umfassen. Dieser enthält insbesondere die Zuordnungen und/oder die Soll-Zeiten. Der Code kann dazu eingerichtet sein, die Küchengeräte zur Durchführung des Speisenzubereitungsvorgangs direkt anzusteuern. Demnach können die Küchengeräte auch ohne eigene Steuerungen auf der Basis des Codes betrieben werden. Das Verfahren kann die Übersetzung des Codes in einen für Fremd-Küchengeräte interpretierbaren Code umfassen. Dies kann einen Aufruf einer abstrakten Funktionsbeschreibung und/oder einer Programmierschnittstelle umfassen, die anschließend in für das Fremd-Küchengerät spezifische Aufrufe umgewandelt werden. Dies kann beim Erstellen oder beim Ausführen des optimierten Rezepts in Form des generierten Codes erfolgen.

Die Übersetzung kann auf unterschiedlichen Ebenen erfolgen. Im einfachsten Fall kann es möglich sein, dem Benutzer eine gerätespezifische Einstellung als Rezeptschritt anzuzeigen. Im Rezept kann dazu die Information enthalten sein, wie die Einstellung abstrakt beschrieben werden kann. Dazu sollte ein Rezeptschritt insbesondere folgende Informationen enthalten: die Art des Küchengeräts, beispielsweise "Herd", die Einstellung des Küchengeräts auf abstrakter Ebene, beispielsweise "mittlere Hitze", und/oder eine Information zur Ansteuerung des Küchengeräts.

In einer Ausgestaltung weist die Steuerungseinheit 12 einen maschinellen Lernalgorithmus auf, der beispielsweise eine Küchenmaschine oder ein Küchengerät Rezeptschritte automatisiert durchführen lassen kann. Dazu kann je nach Küchengerät eine unterschiedliche Anzahl von Schritten mit entsprechenden Betriebsparametern nötig sein. Insbesondere können auch Sensorwerte in den Rezeptschritten hinterlegt sein, beispielsweise hinsichtlich einer Kerntemperatur. Eine übliche Anweisung zur Zubereitung eines Steaks lautet beispielsweise "bei hoher Hitze scharf anbraten und anschließend bei mittlerer Hitze drei Minuten von jeder Seite garen". Hierin verstecken sich mehrere Rezeptschritte mit unterschiedlichen Betriebsparametern. Es besteht das Bedürfnis, aus einem möglichst allgemeinen Rezept, das für unterschiedliche Küchengeräte gültig ist, wie beispielsweise die oben genannte Anweisung, gerätespezifische Anweisungen und Steuerbefehle, insbesondere Betriebsparameter, zu generieren. Diese können beispielsweise spezifisch für das System, die Küchenmaschine und/oder die für den derzeitigen Speisenzubereitungsvorgang verfügbaren Küchengeräte sein. Dies kann dadurch erfolgen, dass eine Küchengerätedatenbank und/oder eine Datenbank, auf die während der Durchführung des computerimplementierten Verfahrens zugegriffen werden kann, zusätzlich zu gegebenenfalls vorhandenen einfachen Steuerbefehlen automatische Programme für bestimmte Lebensmittel enthält. Diese können einen oder mehrere Rezeptschritte, einen oder mehrere Betriebsparameter, Einstellungen und/oder Sensorwerte umfassen. Eine Entscheidungsfindung dahingehend, ob ein automatisiertes Programm auf ein Rezept anwendbar ist, kann eine Nutzung zumindest eines zu verarbeitenden Lebensmittels als Informationsquelle umfassen. Das Verfahren kann umfassen, dass, beispielsweise anhand von Rezeptzutaten und/oder Prozessschritten, ein oder mehrere automatisierte Programme ausgewählt werden können, die individuell auf zu verwendende Küchengeräte angepasst sind. Dies kann mittels der Steuerungseinheit erfolgen.

## Patentansprüche

1. System mit einer Küchenmaschine (1) zum Zubereiten einer Speise in einem Speisenzubereitungsgefäß (2) und/oder einem anderen Küchengerät, wobei eine Steuerungseinheit (12) des Systems auf ein Rezept (26) zugreifen und durch einen Rezeptschritt (16, 17, 18, 19, 28) des Rezepts (26) das Zubereiten der Speise steuern kann, **dadurch gekennzeichnet, dass** die Steuerungseinheit (12) so eingerichtet ist, dass diese eine Soll-Zeit (20) während des Zubereitens der Speise oder für eine Fertigstellung von mindestens zwei Rezeptschritten (16, 17, 18, 19, 28) mit einer Ist-Zeit (24) vergleicht.

2. System nach dem vorhergehenden Anspruch, **dadurch gekennzeichnet, dass** die Steuerungseinheit (12) so eingerichtet ist, dass eine Anpassung einer Dauer zumindest eines derzeitigen oder zukünftigen Rezeptschritts (16, 17, 18, 19, 28) erfolgt und/oder eine Anpassung einer Startzeit eines zukünftigen Rezeptschritts (16, 17, 18, 19, 28) erfolgt, wenn eine Abweichung der Ist-Zeit (24) von der Soll-Zeit (20) ermittelt wird.

3. System nach dem vorhergehenden Anspruch, **dadurch gekennzeichnet, dass** die Anpassung erst dann erfolgt, wenn die Abweichung einen bestimmten Schwellenwert überschreitet.

4. System nach einem der zwei vorhergehenden Ansprüche, **dadurch gekennzeichnet, dass** die Steuerungseinheit (12) so eingerichtet ist, dass zumindest ein gemäß Rezeptschritt vorgesehener Betriebsparameter angepasst wird, wenn eine Abweichung der Ist-Zeit (24) von der Soll-Zeit (20) ermittelt wird und zwar insbesondere, wenn die Abweichung einen bestimmten Schwellenwert überschreitet.

5. System nach einem der drei vorhergehenden Ansprüche, **dadurch gekennzeichnet, dass** die Steuerungseinheit (12) so eingerichtet ist, dass eine Startzeit eines Speisenzubereitungsprozesses neu festgelegt wird, wenn eine Abweichung der Ist-Zeit (24) von der Soll-Zeit (20) ermittelt wird und zwar insbesondere, wenn die Abweichung einen bestimmten Schwellenwert überschreitet.

6. System einem der vorhergehenden Ansprüche, dass die Steuerungseinheit (12) so eingerichtet ist, dass ein Rezeptschritt (16, 17, 18, 19, 28) oder ein in einem Rezeptschritt (16, 17, 18, 19, 28) definierter Speisenzubereitungsprozess auf mehrere Küchengeräte aufgeteilt und den mehreren Küchengeräten durch die Steuerungseinheit (12) zugeordnet werden kann.

7. System nach einem der vorhergehenden Ansprüche, **dadurch gekennzeichnet, dass** die Steuerungseinheit (12) so eingerichtet ist, dass beim Zuordnen eines Rezeptschrittes zu einem Küchengerät eine vom Benutzer eingegebene Zielvorgabe berücksichtigt werden kann.

8. System nach einem der drei vorhergehenden Ansprüche, **dadurch gekennzeichnet, dass** die Steuerungseinheit (12) so eingerichtet ist, dass ermittelt wird, ob ein Rezeptschritt (16, 17, 18, 19, 28) eine Abhängigkeit zu zumindest einem anderen Rezeptschritt (16, 17, 18, 19, 28) aufweist und eine etwaige Abhängigkeit beim Zuordnen des Speisenzubereitungsprozesses und/oder beim Festlegen der Startzeit berücksichtigt wird.

9. System nach einem der vier vorhergehenden Ansprüche, **dadurch gekennzeichnet, dass** die Steuerungseinheit (12) so eingerichtet ist, dass eine Anzahl an Benutzern, die größer oder gleich zwei ist, beim Zuordnen von Rezeptschritten (16, 17, 18, 19, 28) zu Küchengeräten und/oder beim Festlegen einer Startzeit berücksichtigt wird.

10. System nach einem der vorhergehenden Ansprüche, **dadurch gekennzeichnet, dass** die Steuerungseinheit (12) so eingerichtet ist, dass für zumindest einen Rezeptschritt (16, 17, 18, 19, 28) und insbesondere für jeden Rezeptschritt (16, 17, 18, 19, 28) eine Pufferzeit festgelegt wird.

11. System nach einem der vorhergehenden Ansprüche, **dadurch gekennzeichnet, dass** die Steuerungseinheit (12) dazu eingerichtet ist, Funktionskomponenten von mindestens einem verfügbaren weiteren Küchengerät zur Durchführung der Speisenzubereitungsprozesse der Rezeptschritte (16, 17, 18, 19, 28) zu ermitteln.

12. System nach einem der vorhergehenden Ansprüche, **dadurch gekennzeichnet, dass** die Steuerungseinheit (12) so ausgestaltet ist, dass eine Fertigstellung eines Rezeptschritts (16, 17, 18, 19, 28) durch eine Benutzereingabe, durch eine Handlung eines Benutzers oder durch eine Erkennung eines vordefinierten Zustands erkannt wird.

13. System nach einem der vorhergehenden Ansprüche mit zumindest zwei Küchengeräten und einer elektronische Ressourcen-Speichereinrichtung für ein Speichern einer Liste mit Küchengeräten, die das System umfasst, und/oder für ein Speichern der Zahl der Benutzer, die für eine Zubereitung von ein oder mehreren Speisen zur Verfügung stehen.

14. Verfahren zum Zubereiten einer Speise mit den Schritten:
- Zugreifen auf ein Rezept (26),
- Steuern einer Küchenmaschine und/oder eines Küchengeräts für das Zubereiten der Speise durch mindestens einen Rezeptschritt (16, 17, 18, 19, 28) des Rezepts (26),
- Vergleichen einer Soll-Zeit (20) während des Zubereitens der Speise oder für eine Fertigstellung von mindestens zwei Rezeptschritten (16, 17, 18, 19, 28) mit einer Ist-Zeit (24).

15. Verfahren nach dem vorhergehenden Anspruch, mit den Schritten:
- Ermitteln von verfügbaren Funktionskomponenten der Küchenmaschine und/oder des mindestens einen Küchengeräts zur Durchführung eines Speisenzubereitungsprozesses mindestens eines Rezeptschrittes (16, 17, 18, 19, 28),
- Zuordnen der Speisenzubereitungsprozesse, die in dem mindestens einen Rezeptschritt (16, 17, 18, 19, 28) definiert sind, zu den verfügbaren Funktionskomponenten, und
- Ändern des Rezepts (26) durch Verändern der zeitlichen Anordnung der Speisenzubereitungsprozesses zueinander zur Verkürzung der Fertigstellung der Speise.

16. Computerprogrammprodukt umfassend Befehle, die bei einer Ausführung durch einen Prozessor, insbesondere der Steuerungseinheit (12), diesen veranlassen, die Schritte des Verfahrens gemäß einem der vorhergehenden Ansprüche auszuführen.
